(19) Europäisches Patentamt
European Patent Office
Office européen des brevets

(11) **EP 3 332 228 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(21) Anmeldenummer: **16750123.8**

(22) Anmeldetag: **26.07.2016**

(51) Int Cl.:
**G01F 1/84** (2006.01)     **G01N 9/00** (2006.01)
**G01F 15/04** (2006.01)

(86) Internationale Anmeldenummer:
**PCT/EP2016/067716**

(87) Internationale Veröffentlichungsnummer:
**WO 2017/021198 (09.02.2017 Gazette 2017/06)**

(54) **VERFAHREN ZUM ERMITTELN EINES PHYSIKALISCHEN PARAMETERS EINES GASES**

METHOD FOR ASCERTAINING A PHYSICAL PARAMETER OF A GAS

PROCÉDÉ DE DÉTERMINATION D'UN PARAMÈTRE PHYSIQUE D'UN GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2015 DE 102015112737**

(43) Veröffentlichungstag der Anmeldung:
**13.06.2018 Patentblatt 2018/24**

(73) Patentinhaber: **Endress+Hauser Flowtec AG**
**4153 Reinach (CH)**

(72) Erfinder:
• **ZHU, Hao**
**85354 Freising (DE)**
• **RIEDER, Alfred**
**84032 Landshut (DE)**
• **ECKERT, Gerhard**
**79639 Grenzach-Wyhlen (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-B1- 1 190 221     WO-A1-01/01086**
**US-A- 4 262 523     US-A1- 2011 264 385**

**EP 3 332 228 B1**

**Beschreibung**

Die vorliegende Erfindung betrifft ein Verfahren zum Ermitteln eines physikalischen Parameters eines Gases mittels eines Messaufnehmers mit mindestens einem Messrohr zum Führen des Gases, wobei das Messrohr einen einlassseitigen Endabschnitt und einen auslassseitigen Endabschnitt aufweist, wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Schwingungen anregbar ist, wobei aus dem Schwingungsverhalten des Messrohrs Massedurchfluss und Dichte des Gases bestimmbar sind. Die Messwerte für Massedurchfluss und Dichte weisen jedoch Querempfindlichkeiten zur Schallgeschwindigkeit bzw. Kompressibilität des Gases auf. Eine Kompensation dieser Querempfindlichkeiten ist daher erwünscht.

Die Bestimmung der Dichte eines Mediums auf Basis der Schwingungsfrequenz eines vibronischen Sensors ist beispielsweise im Patent US 4,262,523 A1 offenbart.

Die Veröffentlichung US 2011/0264385 A1 offenbart ein Verfahren zum Berechnen der Dichte bzw. des Massedurchflusses eines Mediums auf der Basis von Messungen bei zwei verschiedenen Frequenzen unter Berücksichtigung der Schallgeschwindigkeit des Mediums.

Das Europäische Patent EP 1 190 221 B1 betrifft ein Verfahren zur Bestimmung der Dichte eines Mediums bzw. der mechanischen Spannungen in einem Messrohr auf der Basis von Messungen bei zwei verschiedenen Schwingungsfrequenzen.

Aus der Veröffentlichung WO 01/01086 A1 ist ein Verfahren zur Kompressibilitätskompensation bei der Massedurchflussmessung in einem Coriolis Massedurchflussmesser offenbart. Dabei wird jeweils eine Massedurchflussmessung bei zwei unterschiedlichen Moden durchgeführt, von denen einer ein Biegeschwingungsmode und ein anderer ein Radialmode ist. Aus dem Vergleich der Massedurchflusswerte die mittels dieser beiden Moden ermittelt werden. Dies ist jedoch insofern ein problematischer Ansatz, als die Radialmodeschwingungen erhebliche Abhängigkeit vom Strömungsprofil und vom statischen Druck aufweisen zudem sind mehr Sensoren als die üblichen zwei erforderlich, um sowohl Biegeschwingungen als auch Radialmodeschwingungen erfassen zu können. Gleichermaßen ist eine komplexere Erregerstruktur erforderlich. Es ist daher die Aufgabe der vorliegenden Erfindung ein Messverfahren mit einer robusteren und zugleich einfacheren Kompensation von Querempfindlichkeiten gegenüber Kompressibilität bzw. Schallgeschwindigkeit bereitzustellen. Die Aufgabe wird erfindungsgemäß gelöst durch das Verfahren gemäß dem unabhängigen Patentanspruch.

Das erfindungsgemäße Verfahren ist ein Verfahren nach Anspruch 1. In einer Weiterbidung der Erfindung umfasst das Verfahren den folgenden weiteren Schritt:

Ermitteln eines Korrekturterms für einen vorläufigen Massedurchflusswert zum Bestimmen eines korrigierten Massedurchflussmesswerts auf Basis des ersten vorläufigen Dichtewerts, des zweiten vorläufigen Dichtewerts, der Eigenfrequenz des f1-Modes und der Eigenfrequenz des f3-Modes.

Gemäß der Erfindung weist der Korrekturterm $K_i$ für die vorläufigen Dichtewerte $\rho_i$ auf Basis des der Eigenfrequenz des $f_i$-Modes folgende Form auf:

$$K_i := \left(1 + \frac{r}{\left(\frac{g \cdot c}{f_i}\right)^2 - b}\right),$$

wobei

$$\rho_{corr} := \frac{\rho_i}{K_i}$$

wobei $r$ und $g$ gasunabängige Konstanten sind, c die Schallgeschwindigkeit des Gases ist, $f_i$ die Eigenfrequenz des $f_i$-Modes ist, $\rho_{corr}$ die korrigierte Dichte ist, und b eine Skalierungskonstante ist, wobei insbesondere gilt: r/b < 1, insbesondere r/b < 0,9, und/oder b = 1.

In erster Näherung kann der Zusammenhang eines vorläufigen Dichtewerts $\rho_i$ eines Gases auf Basis der Eigenfrequenz $f_i$ eines fi-Modes beschrieben werden als:

$$\rho_i = c_{0i} + c_{1i}\frac{1}{f_i^2} + c_{2i}\frac{1}{f_i^4},$$

wobei $c_{0i}$, $c_{1i}$, und $c_{2i}$, modenabhängige Koeffizienten sind.

Die obige Näherung berücksichtigt jedoch nicht die Einflüsse des schwingenden Gases im Messrohr. Je näher die Resonanzfrequenz des schwingenden Gases an der Eigenfrequenz eines Biegeschwingungsmodes liegt, umso stärker ist die Beeinflussung der Eigenfrequenz. Da die Resonanzfrequenz des Gases gewöhnlich oberhalb der Eigenfrequenz der Messrohre liegt, ist der Einfluss auf den f3-Biegeschwingungsmode größer als der Einfluss auf den f1-Biegeschwingungsmode. Dies führt zu unterschiedlichen vorläufigen modenspezifischen Dichtewerten, wobei das Verhältnis zwischen den vorläufigen Dichtewerten die Möglichkeit eröffnet, den Einfluss des schwingenden Gases zu ermitteln und zu korrigieren.

Die Resonanzfrequenz des schwingenden Gases hängt von dessen Schallgeschwindigkeit ab. In einer Weiterbildung der Erfindung ist ein modenspezifischer Korrekturterm $K_i$ für einen vorläufigen Dichtewert daher eine Funktion eines Quotienten aus der Schallgeschwindigkeit des Gases und der Eigenfrequenz des Modes, mit dem der vorläufige Dichtemesswert ermittelt wurde.

In einer Weiterbildung der Erfindung wird die Schallgeschwindigkeit c des Gases bestimmt, indem der Schallgeschwindigkeitswert gesucht wird, bei dem der Quotient des ersten Korrekturterms für den ersten vorläufigen Dichtewert geteilt durch den zweiten Korrekturterm für den zweiten vorläufigen Dichtewert, dem Quotienten des ersten vorläufigen Dichtewerts geteilt durch den zweiten vorläufigen Dichtewert entspricht. Welche mathematische Vorgehensweise hierbei zum Einsatz kommt, ist nachrangig.

In einer Weiterbildung der Erfindung wird ist in der obigen Gleichung g vom Durchmesser des Messrohrs abhängiger Proportionalitätsfaktor zwischen einer Resonanzfrequenz $f_{res}$ des Gases und der Schallgeschwindigkeit des Gases, wobei gilt:

$$f_{res} = g \cdot c$$

In einer Weiterbildung der Erfindung werden die vorläufigen Dichtewerte auf Basis der Eigenfrequenz des des $f_i$-Modes mittels eines Polynoms in $1/f_i$, insbesondere in $(1/f_i)^2$ bestimmt, wobei die Koeffizienten des Polynoms modenabhängig sind.

In einer Weiterbildung der Erfindung gilt für einen Dichtefehler $E_{\rho i}$ eines vorläufigen Dichtewerts auf Basis der Eigenfrequenz des fi-Modes:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,5 beispielsweise nicht weniger als 1,8 und insbesondere nicht weniger als 1,9 beträgt, wobei der Proportionalitätsfaktor k nicht mehr als 3, beispielsweise nicht mehr als 2,25 und insbesondere nicht mehr als 2,1 beträgt. In einer derzeit bevorzugten Ausgestaltung der Erfindung beträgt der Proportionalitätsfaktor k = 2.

Für einen Korrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

und

wobei $\dot{m}_v$ der vorläufige Massedurchflusswert ist.

In einer Weiterbildung der Erfindung umfasst das Verfahren weiterhin die folgenden Schritte: Bestimmen einer Abweichung zwischen dem ersten vorläufigen Dichtewert auf Basis der Eigenfrequenz des f1-Modes und dem zweiten vorläufigen Dichtewert auf Basis der Eigenfrequenz des f3-Modes; Prüfen ob die Abweichung größer ist als ein Referenzwert; und, wenn dies der Fall ist: Ermitteln und ggfs. Ausgeben eines Werts für die Schallgeschwindigkeit.

In einer Weiterbildung der Erfindung ist der Referenzwert für die Abweichung der Dichtewerte so gewählt, dass die Schallgeschwindigkeit mit einem statistischen Fehler von nicht mehr als 10%, insbesondere nicht mehr als 5% und bevorzugt nicht mehr als 2% bestimmt werden kann.

In einer Weiterbildung der Erfindung beträgt der Referenzwert nicht weniger als 0.2 kg/m³ insbesondere nicht weniger als 0.4 kg/m³, wobei der Referenzwert weiterhin nicht mehr als 2 kg/m³ beispielsweise nicht mehr als 1 kg/m³, und insbesondere nicht mehr als 0,6 kg/m³ beträgt.

Die Erfindung wird nun anhand des in den Zeichnungen beschriebenen Ausführungsbeispiels näher erläutert.

Es zeigt:

Fig. 1: Ein Flussdiagramm für ein erstes Ausführungsbeispiel eines erfindungsgemäßen Verfahrens;

Fig. 2: Ein Flussdiagramm für ein Detail des ersten Ausführungsbeispiels des erfindungsgemäßen Verfahrens; und

Fig. 3: Ein Diagramm zur Darstellung des Zusammenhangs zwischen dem Verhältnis der Dichtemesswerte und der Schallgeschwindigkeit;

Fig. 4: Ein Diagramm zur Darstellung des Zusammenhangs zwischen einem Dichtekorrekturwert und der Schallgeschwindigkeit;

Fig. 5a: Ein Diagramm zur Darstellung mit dem erfindungsgemäßen Verfahren ermittelten Schallgeschwindigkeitswerten; und

Fig. 5b: Ein Diagramm zur Darstellung mit dem erfindungsgemäßen Verfahren ermittelten Dichtewerten.

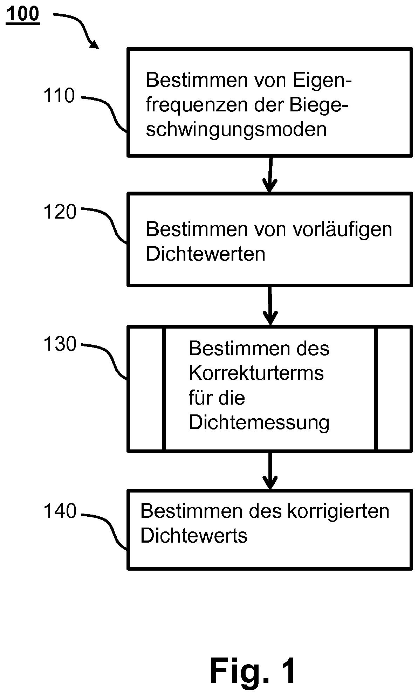

Das in Fig. 1 dargestellte Ausführungsbeispiel eines erfindungsgemäßen Verfahren 100 zum Bestimmen eines Dichtewertes beginnt in einem Schritt 110 die Bestimmung der Eigenfrequenzen des f1-Biegeschwingungsmodes und des f3-Biegeschwingungsmodes. Hierzu können der f1-Biegeschwingungsmode und der f3-Biegeschwingungsmode insbesondere gleichzeitig angeregt werden. Durch Maximieren des Verhältnisses von der Schwingungsamplitude zur modenspezifischen Erregerleistung durch Variieren der Anregungsfrequenzen können die gesuchten Eigenfrequenzen ermittelt werden.

Anhand der ermittelten Eigenfrequenzen fi werden in einem Schritt 120 vorläufige Dichtewerte $\rho_1$ und $\rho_3$ bestimmt als:

$$\rho_i = c_{0i} + c_{1i}\frac{1}{f_i^2} + c_{2i}\frac{1}{f_i^4},$$

wobei $c_{0i}$, $c_{1i}$, und $c_{2i}$, modenabhängige Koeffizienten sind.

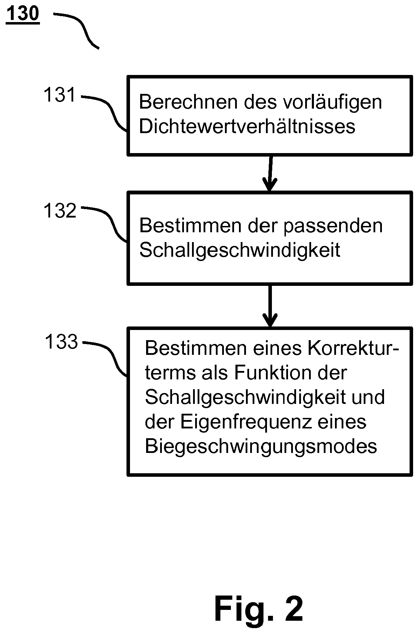

In einem Schritt 130, der weiter unten anhand von Fign. 2 bis 4 näher erläutert wird, erfolgt die Bestimmung eines Korrekturterms für die Dichtemessung.

Schließlich wird in einem Schritt 140 mittels des Korrekturterms ein Korrigierter Dichtewert bestimmt.

Wie in Fig. 2 dargestellt umfasst der Schritt 130 zum Bestimmen des Korrekturterms zunächst in einem Schritt 132 das Berechnen des Verhältnisses V der vorläufigen Dichtewerte, also beispielsweise die Division der vorläufigen Dichtewerte $\rho_1$ und $\rho_3$ zu V:= $\rho_1$ / $\rho_3$.

Anschließend wird in einem Schritt 132 die Schallgeschwindigkeit c bestimmt, welche bei den gemessenen Eigenfrequenzen der Biegeschwingungsmoden zu dem berechneten Verhältnis V der vorläufigen Dichtewerte führt:

$$\frac{\left(1+\dfrac{r}{\left(\dfrac{g\cdot c}{f_1}\right)^2 - b}\right)}{\left(1+\dfrac{r}{\left(\dfrac{g\cdot c}{f_3}\right)^2 - b}\right)} = V$$

wobei r etwa 0,84, b=1 und g ein messrohrabhängiger Proportionalitätsfaktor zwischen Schallgeschwindigkeit und Resonanzfrequenz ist, der beispielsweise einen Wert von 10/m annehmen kann.

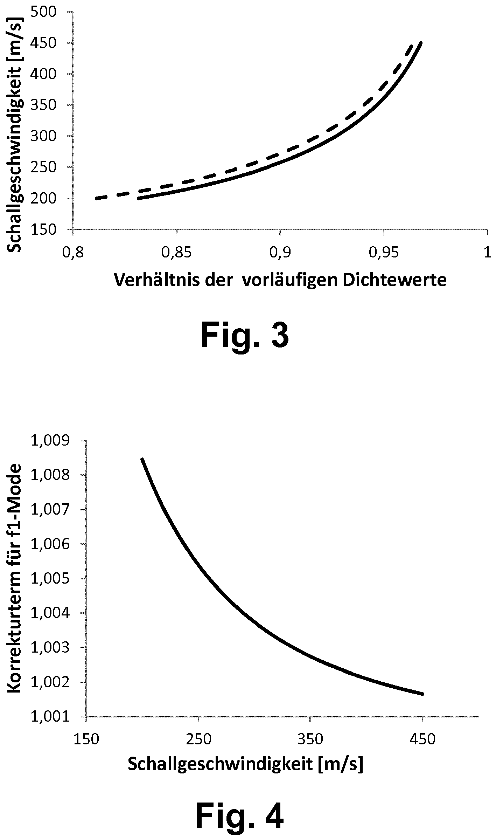

In Fig. 3 ist die Schallgeschwindigkeit als Funktion des Verhältnisses V der vorläufigen Dichtewerte für zwei verschiedene Wertepaare von Eigenfrequenzen der Biegeschwingungsmoden dargestellt. Wobei die durchgezogene Linie für f1= 200 Hz und f3= 900 Hz gilt und die gestrichelte Linie für f1= 210 Hz und f3= 950 Hz. So erfüllt beispielsweise bei f1= 200 Hz und f3= 900 Hz eine Schallgeschwindigkeit von etwa c = 360 m/s die Bedingung V = 0,95 f1= 200 Hz und f3= 900 Hz.

Anhand der ermittelten Schallgeschwindigkeit wird dann im Schritt 133 des Verfahrens in Fig. 2 ein modenspezifischer Korrekturterm $K_i$ berechnet gemäß:

$$K_i := \left(1+\frac{r}{\left(\frac{g\cdot c}{f_i}\right)^2 - 1}\right).$$

Der vorläufige Dichtewert $\rho_i$ wird schließlich im Schritt 140 des Verfahrens in Fig. 1 berechnet gemäß:

$$\rho_{corr} := \frac{\rho_i}{K_i}$$

Der vorläufige Dichtewert $\rho_i$ wird also durch den Korrekturterm $K_i$ geteilt, um den korrigierten Dichtewert $\rho_{corr}$ zu erhalten.

In Fig. 4 ist der im Schritt 133 ermittelte Korrekturterm $K_i$ für den f1 Mode bei einer Eigenfrequenz von f1 = 200 Hz dargestellt. Nach der in Schritt 132 ermittelten Schallgeschwindigkeit von c = 360 m/s wäre der vorläufige Dichtewert auf Basis der Eigenfrequenz des f1-Biegeschwingungsmodes etwa um 0,26% zu groß. Der vorläufige Dichtewert ist also durch den Korrekturterm 1,0026 zu teilen um den einen korrigierten Dichtewert zu erhalten.

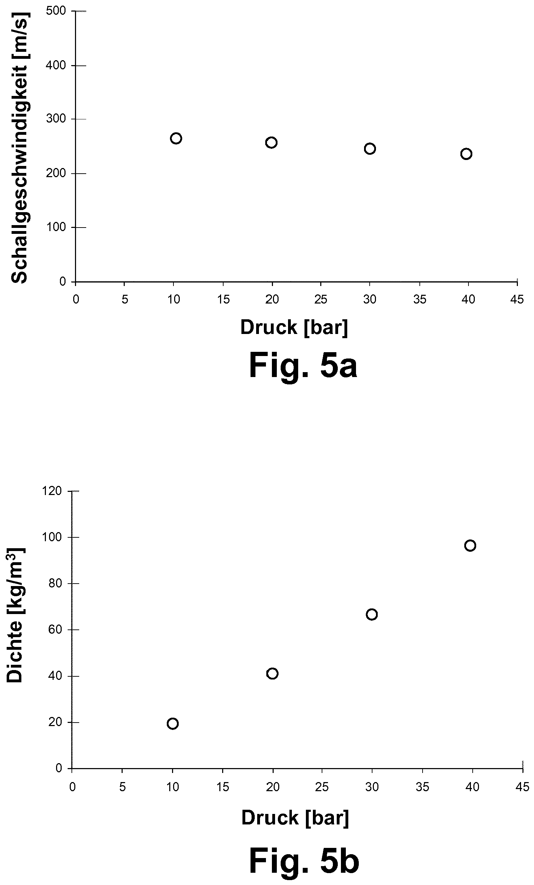

In Fig. 5a sind Ergebnisse für die erfindungsgemäße Bestimmung der Schallgeschwindigkeit von $CO_2$ mittels des erfindungsgemäßen Verfahrens bei verschiedenen Werten für den statischen Druck gezeigt. Während des Experiments nahm die Eigenfrequenz des f1-Modes dabei mit zunehmendem Druck von etwa 568 Hz auf 559 Hz ab, während die Eigenfrequenz des f3-Modes von etwa 3066 Hz auf etwa 3005 Hz fiel.

In Fig. 5b sind schließlich Ergebnisse für die erfindungsgemäße Bestimmung der Dichte von $CO_2$ mittels des erfindungsgemäßen Verfahrens bei verschiedenen Werten für den statischen Druck gezeigt, Wobei die jeweiligen Korrekturterme zur Korrektur der vorläufigen Dichtewerte auf Basis der in Fig. 5a dargestellten Schallgeschwindigkeitswerte ermittelt wurden.

Korrekturterme für einen vorläufigen Massedurchflussmesswert eines Coriolis-Massedurchflussmessgerätes, können aus den Korrekturtermen für die Dichte bestimmt werden, indem aus dem Korrekturterm $K_i$ für die Dichte der zunächst der Dichtefehler $E_{\rho i}$ bestimmt wird:

$$E_{\rho i} := K_i - 1,$$

Der Massedurchflussfehler $E_m$ zur Korrektur eines vorläufigen Massedurchflusswerts beträgt insbesondere das Doppelte $E_{\rho 1}$ des ersten vorläufigen Dichtefehlers $E_{\rho 1}$, also:

$$E_m := 2 \cdot E_{\rho 1}.$$

Für einen Korrekturterm $K_m$ für den Massen-

durchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

und
wobei $\dot{m}_v$ ein vorläufiger Massedurchflusswert ist, der sich aus der Phasendifferenz zwischen den Signalen zweier symmetrisch am Messrohr angeordneter Schwingungssensoren und einem Kalibrierfaktor ergibt.

## Patentansprüche

1. Verfahren zum Ermitteln eines physikalischen Parameters eines Gases mittels eines Messaufnehmers mit mindestens einem Messrohr zum Führen des Mediums,
   wobei das Messrohr ein einlassseitigen Endabschnitt und einen auslassseitigen Endabschnitt aufweist,
   wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Biegeschwingungen verschiedener Moden mit unterschiedlichen Eigenfrequenzen anregbar ist, von denen ein f1-Mode keinen Schwingungsknoten zwischen den Fixiervorrichtungen aufweist, und wobei ein f3-Mode zwei Schwingungsknoten zwischen den Fixiervorrichtungen aufweist,
   wobei das Verfahren (100) die folgenden Schritte umfasst:

   Ermitteln der Eigenfrequenz des f1-Modes und des f3-Modes (110);
   Ermitteln eines ersten vorläufigen Dichtewerts für das im Messrohr geführte Gas auf Basis der Eigenfrequenz des f1-Modes (120);
   Ermitteln eines zweiten vorläufigen Dichtewerts für das im Messrohr geführte Gas auf Basis der Eigenfrequenz des f3-Modes (120);
   Ermitteln eines Werts für die Schallgeschwindigkeit des im Messrohr geführten Gases, und zumindest eines von der Schallgeschwindigkeit und der Eigenfrequenz eines Modes abhängigen Korrekturterms (130) für den vorläufigen Dichtewert, der auf Basis der Eigenfrequenz des Modes ermittelt wurde, zum Bestimmen eines korrigierten Dichtemesswerts (140); wobei der

Korrekturterm $K_i$ für die vorläufigen Dichtewerte $\rho_i$ auf Basis der Eigenfrequenz des $f_i$-Modes folgende Form aufweist:

$$K_i := \left( 1 + \frac{r}{\left(\frac{g \cdot c}{f_i}\right)^2 - b} \right),$$

wobei

$$\rho_{corr} := \frac{\rho_i}{K_i}$$

wobei $r$ und $g$ gasunabhängige Konstanten sind, $c$ die Schallgeschwindigkeit des Gases ist, $f_i$ die Eigenfrequenz des $f_i$-Modes ist, $\rho_{corr}$ die korrigierte Dichte ist, und $b$ eine Skalierungskonstante ist.

2. Verfahren nach Anspruch 1, wobei das Verfahren (100) den folgenden weiteren Schritt umfasst:
   Ermitteln eines Korrekturterms für einen vorläufigen Massendurchflusswert zum Bestimmen eines korrigierten Massendurchflussmesswerts auf Basis des ersten vorläufigen Dichtewerts, des zweiten vorläufigen Dichtewerts, der Eigenfrequenz des f1-Modes und der Eigenfrequenz des f3-Modes.

3. Verfahren nach Anspruch 1 oder 2, wobei die Schallgeschwindigkeit c des Gases bestimmt wird, indem der Schallgeschwindigkeitswert gesucht wird, bei dem der Quotient des ersten Korrekturterms für den ersten vorläufigen Dichtewert geteilt durch den zweiten Korrekturterm für den zweiten vorläufigen Dichtewert, dem Quotienten des ersten vorläufigen Dichtewerts geteilt durch den zweiten vorläufigen Dichtewert entspricht.

4. Verfahren nach einem der vorhergehenden Ansprüche, wobei gilt: r/b < 1, insbesondere r/b < 0,9.

5. Verfahren nach Anspruch einem der vorhergehenden Ansprüche, wobei b=1.

6. Verfahren nach einem der vorhergehenden Ansprüche, wobei g vom Durchmesser des Messrohrs abhängiger Proportionalitätsfaktur zwischen einer Resonanzfrequenz $f_{res}$ des Gases und der Schallgeschwindigkeit des Gases ist, wobei gilt:

$$f_{res} = g \cdot c$$

7. Verfahren nach einem der vorhergehenden Ansprüche, wobei die vorläufigen Dichtewerte auf Basis der Eigenfrequenz des des $f_i$-Modes mittels eines Poly-

noms in $1/f_i$, insbesondere in $(1/f_i)^2$ bestimmt werden, wobei die Koeffizienten des Polynoms modenabhängig sind.

8. Verfahren nach einem der vorhergehenden Ansprüche, wobei für einen Dichtefehler $E_{\rho i}$ eines vorläufigen Dichtewerts auf Basis der Eigenfrequenz des fi-Modes gilt:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,5, beispielsweise nicht weniger als 1,8 und insbesondere nicht weniger als 1,9 beträgt, wobei der Proportionalitätsfaktor k nicht mehr als 3, beispielsweise nicht mehr als 2,25 und insbesondere nicht mehr als 2,1 beträgt, wobei für den Korrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

wobei $\dot{m}_v$ der vorläufige Massedurchflusswert ist.

9. Verfahren nach einem der vorhergehenden Ansprüche, wobei das Verfahren weiterhin die folgenden Schritte umfasst:

Bestimmen einer Abweichung zwischen dem ersten vorläufigen Dichtewert auf Basis der Eigenfrequenz des f1-Modes und dem zweiten vorläufigen Dichtewert auf Basis der Eigenfrequenz des f3-Modes;
Prüfen, ob die Abweichung größer ist als ein Referenzwert; und,
wenn dies der Fall ist: Ermitteln und ggfs. Ausgeben eines Werts für die Schallgeschwindigkeit.

10. Verfahren nach Anspruch 9, wobei der Referenzwert für die Abweichung der Dichtewerte so gewählt ist, dass die Schallgeschwindigkeit mit einem statistischen Fehler von nicht mehr als 10%, insbesondere nicht mehr als 5% und bevorzugt nicht mehr als 2% bestimmt werden kann.

11. Verfahren nach Anspruch 9,
wobei der Referenzwert nicht weniger als 0.2 kg/m$^3$ insbesondere nicht weniger als 0.4 kg/m$^3$ beträgt,
wobei der Referenzwert nicht mehr als 2 kg/m$^3$ beispielsweise nicht mehr als 1 kg/m$^3$, und insbesondere nicht mehr als 0,6 kg/m$^3$ beträgt.

## Claims

1. Procedure for determining a physical parameter of a gas using a sensor with at least a measuring tube designed to conduct the medium,

wherein the measuring tube has an end section on the inlet side and an end section on the outlet side,
wherein the sensor has at least a fixing unit on the inlet side and a fixing unit on the outlet side with which the measuring tube is fixed, respectively, in one of the end sections, wherein the measuring tube between the two fixing units can be excited to perform flexural vibrations of different modes with different natural frequencies, wherein of said modes a mode f1 does not have any vibration node between the fixing units, and wherein a mode f3 has two vibration nodes between the fixing units,
wherein the procedure (100) comprises the following steps:

Determination of the natural frequency of mode f1 and of mode f3 (110);
Determination of a first provisional density value for the gas conducted through the measuring tube on the basis of the natural frequency of mode f1 (120);
Determination of a second provisional density value for the gas conducted through the measuring tube on the basis of the natural frequency of mode f3 (120);
Determination of a value for the sound velocity of the gas conducted through the measuring tube, and
of at least a corrective term (130), which depends on the sound velocity and the natural frequency of a mode, for the provisional density value, which has been determined on the basis of the natural frequency of the mode, for the purpose of determining a corrected density measured value (140);
wherein the corrective term $K_i$ for the provi-

sional density values $\rho_i$ on the basis of the natural frequency of the mode $f_i$ has the following format:

$$K_i := \left(1 + \frac{r}{\left(\frac{g \cdot c}{f_i}\right)^2 - b}\right),$$

with

$$\rho_{corr} := \frac{\rho_i}{K_i}$$

where r and g are constants that are independent of gas, c is the sound velocity of the gas, $f_i$ is the natural frequency of the mode $f_i$, $\rho_{corr}$ is the corrected density and b is a scaling constant.

2. Procedure as claimed in Claim 1, wherein said procedure (100) comprises the following additional step: Determination of a corrective term for a provisional mass flow value for the purpose of determining a corrected mass flow measured value on the basis of the first provisional density value, the second provisional density value, the natural frequency of mode f1 and the natural frequency of mode f3.

3. Procedure as claimed in Claim 1 or 2, wherein the sound velocity c of the gas is determined in that a search is performed for the sound velocity value at which the quotient of the first corrective term for the first provisional density value divided by the second corrective term for the second provisional density value corresponds to the quotient of the first provisional density value divided by the second provisional density value.

4. Procedure as claimed in one of the previous claims, wherein the following relation applies: r/b < 1, particularly r/b < 0.9.

5. Procedure as claimed in one of the previous claims, wherein b = 1.

6. Procedure as claimed in one of the previous claims, wherein g is a proportionality factor - which depends on the diameter of the measuring tube - between a resonance frequency $f_{res}$ of the gas and the sound velocity of the gas, with the following formula:

$$f_{res} = g \cdot c$$

7. Procedure as claimed in one of the previous claims, wherein the provisional density values are determined on the basis of the natural frequency of mode $f_i$ using a polynomial in $1/f_i$, particularly in $(1/f_i)^2$, wherein the coefficients of the polynomial depend on the mode.

8. Procedure as claimed in one of the previous claims, wherein the following formula applies for a density error $E_{\rho i}$ of a provisional density value on the basis of the natural frequency of the mode fi:

$$E_{\rho i} = K_i - 1,$$

wherein a mass flow error $E_m$ of a provisional mass flow value is proportional to the density error $E_{\rho 1}$ of the first provisional density value, i.e.:

$$E_m = k \cdot E_{\rho 1},$$

wherein the proportionality factor k is not less than 1.5, for example not less than 1.8 and particularly not less than 1.9, wherein the proportionality factor k is not greater than 3, for example not greater than 2.25 and particularly not greater than 2.1, wherein the following rule applies for the corrective term $K_m$ for the mass flow:

$$K_m = 1 + E_m,$$

wherein the corrected mass flow $m_{corr}$ is determined as follows:

$$\dot{m}_{corr} := \frac{\dot{m}_v}{K_m},$$

$m_v$ being the provisional mass flow value.

9. Procedure as claimed in one of the previous claims, wherein said procedure further comprises the following steps:

Determination of a deviation between the first provisional density value on the basis of the natural frequency of mode f1 and the second provisional density value on the basis of the natural frequency of mode f3;
Check to determine whether the deviation is greater than a reference value; and, if this is the case: determination and, where applicable, outputting of a value for the sound velocity.

10. Procedure as claimed in Claim 9, wherein the reference value for the deviation of the density values is selected in such a way that the sound velocity can be determined with a static error of not more than 10 %, particularly not more than 5 % and preferably not more than 2 %.

11. Procedure as claimed in Claim 9,
   wherein the reference value is not less than 0.2 kg/m$^3$, particularly not less than 0.4 kg/m$^3$, wherein the reference value is not more than 2 kg/m$^3$, for example not more than 1 kg/m$^3$, and particularly not more than 0.6 kg/m$^3$.

## Revendications

1. Procédé destiné à la détermination d'un paramètre physique d'un gaz au moyen d'un transmetteur avec au moins un tube de mesure destiné à guider le produit,

   le tube de mesure présentant une partie d'extrémité côté entrée et une partie d'extrémité côté sortie,
   le transmetteur comprenant au moins un dispositif de fixation côté entrée et un dispositif de fixation côté sortie, avec lesquels le tube de mesure est fixé respectivement dans l'une des parties d'extrémité, le tube de mesure pouvant être excité entre les deux dispositifs de fixation en vibrations de flexion de différents modes avec différentes fréquence propres, modes parmi lesquels un mode f1 ne présente aucun nœud de vibration entre les dispositifs de fixation, et un mode f3 présente deux nœuds de vibration entre les dispositifs de fixation,
   le procédé (100) comprenant les étapes suivantes :

   Détermination de la fréquence propre du mode f1 et du mode f3 (110) ;
   Détermination d'une première valeur provisoire de densité pour le gaz guidé dans le tube de mesure sur la base de la fréquence propre du mode f1 (120) ;
   Détermination d'une deuxième valeur provisoire de densité pour le gaz guidé dans le tube de mesure sur la base de la fréquence propre du mode f3 (120) ;
   Détermination d'une valeur pour la vitesse du son du gaz guidé dans le tube de mesure, et
   d'au moins un terme de correction (130) dépendant de la vitesse du son et de la fréquence propre d'un mode, pour la valeur provisoire de densité, qui a été déterminée sur la base de la fréquence propre du mode, en vue de la détermination d'une valeur mesurée de densité corrigée (140) ;

le terme de correction $K_i$ pour les valeurs provisoires de densité $\rho_i$ basé sur le fréquence propre du mode $f_i$ présentant la forme suivante :

$$K_i := \left(1 + \frac{r}{\left(\frac{g \cdot c}{f_i}\right)^2 - b}\right),$$

avec

$$\rho_{corr} := \frac{\rho_i}{K_i}$$

où $r$ et g sont des constantes indépendantes du gaz, c est la vitesse du son du gaz, $f_i$ est la fréquence propre du mode $f_i$, $\rho_{corr}$ est la densité corrigée et b est une constante de mise à l'échelle.

2. Procédé selon la revendication 1, lequel procédé (100) comprend l'étape supplémentaire suivante :
   Détermination d'un terme de correction pour une valeur provisoire de débit massique en vue de la détermination d'une valeur de débit massique corrigée sur la base de la première valeur provisoire de densité, de la deuxième valeur provisoire de densité, de la fréquence propre du mode f1 et de la fréquence propre du mode f3.

3. Procédé selon la revendication 1 ou 2, pour lequel la vitesse du son c du gaz est déterminée en ce qu'est recherchée la valeur de vitesse du son pour laquelle le quotient du premier terme de correction pour la première valeur provisoire de densité divisé par le deuxième terme de correction pour la deuxième valeur provisoire de densité correspond au quotient de la première valeur provisoire de densité divisée par la deuxième valeur provisoire de densité.

4. Procédé selon l'une des revendications précédentes, pour lequel la relation suivante est valable :
   r/b < 1, notamment r/b < 0,9.

5. Procédé selon l'une des revendications précédentes, pour lequel b = 1.

6. Procédé selon l'une des revendications précédentes, pour lequel g est un facteur de proportionnalité entre une fréquence de résonance $f_{res}$ du gaz et la vitesse du son du gaz, avec la formule suivante :

$$f_{res} = g \cdot c$$

**7.** Procédé selon l'une des revendications précédentes, pour lequel les valeurs provisoires de densité sont déterminées sur la base de la fréquence propre du mode $f_i$, au moyen d'un polynôme dans $1/f_i$, notamment dans $(1/f_i)^2$, les coefficients du polynôme étant dépendants du mode.

**8.** Procédé selon l'une des revendications précédentes, pour lequel la formule suivante est valable pour une erreur de densité $E_{\rho i}$ d'une valeur provisoire de densité sur la base de la fréquence propre du mode fi :

$$E_{\rho i} = K_i - 1,$$

une erreur de débit massique $E_m$ d'une valeur provisoire de débit massique étant proportionnelle à une erreur de densité $E_{\rho 1}$ de la première valeur provisoire de densité, par conséquent :

$$E_m = k \cdot E_{\rho 1},$$

le facteur de proportionnalité k n'étant pas inférieur à 1,5, par exemple pas inférieur à 1,8 et notamment pas inférieur à 1,9,
le facteur de proportionnalité k n'étant pas supérieur à 3, par exemple pas supérieur à 2,25 et notamment pas supérieur à 2,1,
la règle suivante s'appliquant concernant le terme de correction $K_m$ pour le débit massique :

$$K_m = 1 + E_m,$$

le débit massique corrigé $m_{corr}$ étant déterminé comme suit :

$$\dot{m}_{corr} := \frac{\dot{m}_v}{K_m},$$

$m_v$ étant la valeur provisoire de débit massique.

**9.** Procédé selon l'une des revendications précédentes, lequel procédé comprend en outre les étapes suivantes :

Détermination d'un écart entre la première valeur provisoire de densité sur la base de la fréquence propre du mode f1 et de la deuxième valeur provisoire de densité sur la base de la fréquence propre du mode f3 ;
Vérification si l'écart est supérieur à une valeur de référence ; et,
si c'est le cas : Détermination et, le cas échéant, émission d'une valeur pour la vitesse du son.

**10.** Procédé selon la revendication 9, pour lequel la valeur de référence pour l'écart des valeurs de densité est choisie de telle sorte que la vitesse du son puisse être déterminée avec une erreur statique qui n'est pas supérieure à 10 %, notamment pas supérieure à 5 % et de préférence pas supérieure à 2 %.

**11.** Procédé selon la revendication 9, pour lequel la valeur de référence n'est pas inférieure à 0,2 kg/m$^3$, notamment pas inférieure à 0,4 kg/m$^3$, pour lequel la valeur de référence n'est pas supérieure à 2 kg/m$^3$, par exemple pas supérieure à 1 kg/m$^3$, et notamment pas supérieure à 0,6 kg/m$^3$.

**100**

110 — Bestimmen von Eigenfrequenzen der Biegeschwingungsmoden

120 — Bestimmen von vorläufigen
Dichtewerten

130 — Bestimmen des
Korrekturterms
für die
Dichtemessung

140 — Bestimmen des korrigierten
Dichtewerts

# Fig. 1

**130**

131 — Berechnen des vorläufigen Dichtewertverhältnisses

132 — Bestimmen der passenden Schallgeschwindigkeit

133 — Bestimmen eines Korrektur-terms als Funktion der Schallgeschwindigkeit und der Eigenfrequenz eines Biegeschwingungsmodes

# Fig. 2

Fig. 3

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4262523 A1
- US 20110264385 A1
- EP 1190221 B1
- WO 0101086 A1